# EUROPÄISCHE PATENTSCHRIFT

(11) **EP 3 528 023 B1**
(45) Veröffentlichungstag und Bekanntmachung des Hinweises auf die Patenterteilung: **10.11.2021**
(21) Anmeldenummer: 18020064.4
(22) Anmeldetag: 15.02.2018
(51) Int. Cl.: G02B 6/44

(54) **SPLEISSMODUL MIT PATCHEINHEIT**
SPLICE MODULE WITH PATCH UNIT
MODULE D'ÉPISSURE AVEC UNITÉ DE PATCH

(43) Veröffentlichungstag der Anmeldung: 21.08.2019
(73) Patentinhaber: ZweiCom-Hauff GmbH, 73494 Rosenberg (DE)
(72) Erfinder:
(74) Vertreter: König Szynka Tilmann von Renesse Patentanwälte Partnerschaft mbB

(56) Entgegenhaltungen:
- EP-A1- 2 669 726
- EP-A1- 2 788 808
- EP-B1- 2 409 192
- WO-A1-2010/085388
- DE-U1- 20 115 940
- US-A- 5 100 221
- US-A1- 2015 093 089
- US-A1- 2015 346 449

## Beschreibung

Die Erfindung betrifft ein Spleißmodul für Lichtwellenleiterkabel ("LWL-Kabel"). Solche Lichtwellenleiterkabel sind auch als Glasfaserkabel bekannt.

LWL-Kabel dienen zur Signalübertragung mit hohen Übertragungsraten und/oder hoher räumlicher Reichweite und finden zunehmend Einsatz. Insbesondere werden zunehmend die LWL-Kabelnetze bis zum Verbraucher verlegt oder sogar bis zum Endgerät im Haushalt oder Büro. Mit dem zunehmenden Ausbau der LWL-Kabelnetze stellt sich immer häufiger die Aufgabe der Verbindung von LWL-Kabeln untereinander.

Dabei werden die einzelnen Fasern mit einer an sich bekannten Technologie aneinandergefügt und diese sogenannten Spleißstellen in ebenfalls an sich bekannter Weise geordnet sowie zugänglich und geschützt untergebracht. Man spricht von Spleißmodulen, in denen typischerweise eine Mehrzahl (z. B. zwölf oder eine Vielzahl von zwölf) Glasfasern in Kabeln mit jeweils einer einzelnen Glasfaser in jeweiligen Spleißkassetten gespleißt sind und mit kurzen Anschlussfasern (Pigtails) auf lösbare Anschlusselemente (etwa Stecker und Kupplungen) geführt werden. Dort können dann zur Weiterführung der Glasfaserverbindungen LWL-Kabel mit Verbindungselementen (etwa Steckern) eingesetzt werden. Im Folgenden bezieht sich der Begriff des LWL-Kabels also auf einen Kabeltyp im Bereich eines solchen Spleißmoduls und nicht auf ein bspw. unter einer Straße vergrabenes "Glasfaserkabel" mit einem dicken und vielfältigen Bündel einzelner Fasern.

Zur Zugänglichkeit zu den einzelnen Spleiß- und Patchstellen verfügen bekannte Spleißmodule typischerweise über einen bewegten schubladenähnlichen Auszug und eine ortsfeste Halterung. Bei besonderen Varianten ist der Ausdruck nicht translatorisch auszuziehen, sondern um eine Drehachse. Beispielhaft kann verwiesen werden auf die EP 2 669 726 A1. Dieser Stand der Technik zeigt auch eine Patcheinheit auf einer Vorderseite des dargestellten Spleißmoduls mit insgesamt 2 x 12 lösbaren Steckverbindungen.

Die DE 201 15 940 U1 zeigt eine vertikale Reihe von Patchstellen und daneben vertikale Reihen von Öffnungen an einer Frontplatte vor einem Satz Kassetten, in denen unter anderem Spleißstellen untergebracht sind. Das Dokument offenbart damit den Oberbegriff des Anspruchs 1. Die Frontplatte mit den Patchstellen und Öffnungen soll flexibel und gut an jeweilige Bedürfnisse anzupassen sein. Pigtail-Kabel werden in Verbindung mit dem Einlegen von Lichtwellenleitern in Bündeladern erwähnt.

Die EP 2 788 808 A1 zeigt ein Spleißmodul mit zwei Spleißkassetten, nämlich Oberseite und Unterseite einer Platte, in einem Gehäuse, wobei das Gehäuse an entgegengesetzten Seiten universell nutzbare Schlitze zwischen vertikalen Streben aufweist. In diese Schlitze können nach Belieben Steckverbindungen oder durch Klemmeinrichtungen gehaltene durchgehende Kabel eingelegt werden.

Die WO 2010/085388 A1 zeigt ein Rack aus übereinanderliegenden horizontalen Patchsystemen mit jeweils zwei Trägern mit jeweils einer Patch-Spleiß-Anordnung darauf. Darin sind zur Erhöhung der Zahl von Spleißstellen zwei hintereinanderliegende Reihen aus jeweiligen Klemmstellen für Steckverbindungen und Lücken dazwischen vorgesehen, wobei Kabel jeweils durch eine Lücke zu einer davor oder dahinter liegenden Patchstelle laufen können.

Zum Stand der Technik wird ferner verwiesen auf die US 2015/093089 A1, die US 5 100 221 A, die EP 2 409 192 B1 und die EP 2 669 726 A1.

Insbesondere zeigt die US 2015/346449 A1 ein Spleißmodul mit vorinstallierten Pigtail-Kabeln und Vorrichtungen für zwei steckbare Anschlüsse, allerdings nicht für ununterbrochen durchgehende Leitungen.

Der Erfindung liegt die Aufgabe zugrunde, eine hinsichtlich der LWL-Kabelführung funktionstüchtige und praktische Verbesserung anzugeben.

Diese Aufgabe wird gelöst durch ein Spleißmodul für LWL-Kabel mit einer Vielzahl Spleißstellenablagen in dem Spleißmodul und einer Patcheinheit, die eine Vielzahl Patchstellen mit jeweils einer lösbaren Verbindungseinrichtung für ein jeweiliges LWL-Kabel aufweist, wobei die Patcheinheit zusätzlich Durchgangsstellen ohne lösbare Verbindungseinrichtungen aufweist, welche stattdessen für den Durchgang je eines durchlaufenden LWL-Kabels durch eine jeweilige Öffnung jeder Durchgangsstelle vorgesehen sind und die Durchgangsstellen und die Patchstellen jeweils nächstbenachbart zueinander sind und zwar in dem Sinn, dass von einer Patchstelle ausgehend bezüglich einer Richtung quer zur lokalen LWL-Kabelrichtung nicht alle übrigen Patchstellen näher liegen als die nächste Durchgangsstelle, es also mindestens eine Patchstelle gibt, die weiter entfernt ist als eine solche nächste Durchgangsstelle, wobei an den Patchstellen jeweils lösbare Anschlusselemente von zu jeweiligen der Spleißstellenablagen führenden Pigtail-Kabeln vorliegen, welche ausgelegt sind zu Verbindungen mit komplementären lösbaren Anschlusselementen jeweiliger Patchkabel an den Patchstellen, dadurch gekennzeichnet, dass die Pigtail-Kabel bereits vorliegen und die jeweilige Patchstelle mit einer jeweiligen der Spleißstellenablagen verbinden, in der allerdings noch keine Spleißstelle gebildet und abgelegt ist, und in verbesserter Ausgestaltung durch die verschiedenen abhängigen Ansprüche. Ferner bezieht sich die Erfindung auch auf einen Spleißmodulstapel nach Anspruch 12, einen Verteilerschrank 13 mit einer Mehrzahl solcher Spleißmodule und schließlich auf eine vorteilhafte Verwendung nach Anspruch 15.

Erfindungsgemäß sind zu den einzelnen Patchstellen einer Patcheinheit jeweils nächstbenachbarte Durchgangsstellen vorgesehen, die ebenfalls zur Patcheinheit gehören. An diesen Durchgangsstellen liegen keine lösbaren Anschlüsse vor, sondern lediglich Öffnungen, durch die Glasfaserkabel durchlaufend geführt werden oder sein können.

Es hat sich nämlich herausgestellt, dass nicht nur immer wieder Bedarf am Durchführen nicht unterbrochener LWL-Kabel besteht, sondern dass die Installation der Kabel besonders leicht und übersichtlich gerät, wenn solche durchlaufenden Kabel möglichst nah an einer zugeordneten Patchstelle liegen bzw. wenn möglichst nah an einer solchen Patchstelle eine entsprechende Öffnung vorhanden ist. Dann kann beim Installieren ein Kabel wahlweise getrennt und mit den üblichen lösbaren Anschlusselementen, insbesondere Steckern, an einer Patchstelle wieder verbunden werden. Es kann aber stattdessen auch ohne Trennung durch die Durchgangsstelle geführt werden.

Insbesondere bleibt eine unmittelbare räumliche Beziehung zwischen den Patchstellen und den Durchgangsstellen erhalten, sodass auch bei nachträglichen Änderungen, etwa der Auftrennung eines zunächst ungetrennten LWL-Kabels, (eine Freihaltung vorausgesetzt) eine benachbarte Patchstelle zur Verfügung steht. Die räumliche Anordnung der Kabel muss dann also möglichst wenig geändert werden und die Verlegung bleibt auch bei nachträglichen Änderungen klar und übersichtlich. Das gilt auch umgekehrt, wenn nämlich zunächst getrennte LWL-Kabel, die an einer Patchstelle verbunden sind, durch durchgehende LWL-Kabel ersetzt werden sollen.

Z. B. können bei der Installation kundenabhängige Präferenzen vorliegen. So kann z. B. ein technischer Betrieb oder eine Bankfiliale als Kunde wegen erhöhter Sicherheit die Vermeidung von Patchstellen (Steckverbindungen) vorziehen, wohingegen z. B. Privathaushalte als Kunden Patchstellen wegen der leichten Umsteckbarkeit zugewiesen bekommen, um z. B. von einem Telekommunikationsanbieter leichter zu einem anderen wechseln zu können. Wenn nun z. B. ein Gewerbegebäude in ein Wohngebäude umgewandelt oder an Mieter mit anderen Anforderungen neu vermietet wird, kann erfindungsgemäß sehr leicht die jeweilige Präferenz berücksichtigt werden.

Ferner können im Rahmen der Erfindung auch sogenannte Duplex-Patchstellen Verwendung finden. Dabei werden besonders kleine lösbare Verbindungselemente (Steckelemente) eingesetzt werden, die paarweise zusammen in eine Rastaufnahme (oder andere Aufnahme) für ein (konventionelles) Verbindungselement passen. Es werden also auf der eigentlich für eine Patchstelle vorgesehenen Fläche zwei Patchstellen untergebracht, sodass die Zahl der einzelnen Kabel verdoppelt werden kann. Die Kabel bleiben dabei aber individuell geführt und an den Patchstellen verbunden. In solchen Fällen wird die Zahl der Durchgangsstellen dementsprechend vorzugsweise auch verdoppelt.

"Nächstbenachbart" meint dabei, dass es von einer Patchstelle ausgehend (und bezüglich einer Richtung quer zur lokalen LWL-Kabelrichtung) zwar andere Patchstellen geben darf, die noch näher liegen als die nächsten Durchgangsstellen, dass aber nicht alle übrigen Patchstellen näher liegen als die nächste Durchgangsstelle. Es gibt also mindestens eine weiter entfernte Patchstelle.

Vorzugsweise sind höchstens 10 und besonders bevorzugterweise höchstens 9, 8, 7, 6, 5, 4, 2 oder sogar nur eine Patchstelle näher benachbart als die nächste Durchgangsstelle. Das Gleiche gilt vorzugsweise umgekehrt, also von einer Durchgangsstelle ausgehend, und gilt vorzugsweise für alle Patchstellen und/oder für alle Durchgangsstellen.

Vorzugsweise soll der Abstand zwischen einer Durchgangsstelle und der nächsten Patchstelle und umgekehrt (wieder in der Richtung senkrecht zur lokalen LWL-Kabelrichtung) möglichst gering sein auch bezüglich eines von dem Abstand zur nächsten gleichartigen Stelle unabhängigen Maßes. Dabei bietet sich als Maß ein typischer Durchmesser eines lösbaren Verbindungs- oder Anschlusselements in der genannten Richtung an. Wenn z. B. der Stecker dabei unrund ist, ist ein gemittelter Durchmesser gemeint. Bevorzugt sind dabei Abstände von höchstens 5 und vorzugsweise höchstens 4 oder sogar höchstens 3 solche Durchmesser. Als Position gilt jeweils die Mitte des LWL-Kabels.

Ferner ist bevorzugt, dass die Patchstellen und Durchgangsstellen in einer 1:1-Entsprechung vorliegen. Dies ist zunächst auf die beschriebene nächste Nachbarschaft bezogen und bedeutet somit, dass (quasi in einer bijektiven Beziehung) jeder Patchstelle eine nächstbenachbarte (im obigen Sinn) Durchgangsstelle zuzuordnen ist und umgekehrt. Daraus ergibt sich auch, dass die Patchstellen und Durchgangsstellen in gleicher Zahl vorliegen.

Bei der Erfindung ergibt sich eine Patchstelle durch ein von der Seite der Spleißstellenablage aus bereits eingeführtes, aber an sich lösbares Anschlusselement, bspw. ein Steckelement, und zwar am der Patcheinheit zugewandten Ende eines Pigtails. Dieses Element kann in eine entsprechende Aufnahme (z. B. eine Rastaufnahme) an der Patcheinheit eingeführt sein und damit dort eine Patchstelle bilden, in die von der anderen Seite ein komplementäres Verbindungselement eines Patchkabels eingeführt werden kann. Erfindungsgemäß liegt also das Pigtailkabel bereits vor und verbindet die Patchstelle mit einer entsprechenden Spleißkassette, in der allerdings noch keine Spleißstelle gebildet und abgelegt ist.

Der Anwender verwendet ein solches Spleißmodul, indem er einerseits die Spleißstelle an dem entsprechenden Ende des Pigtails herstellt und in der Spleißkassette ablegt (und das angeschlossene LWL-Kabel aus der Spleißkassette entsprechend weiterführt); ferner schließt der Anwender an der zugehörigen Patchstelle ein Patchkabel von der anderen Seite an. Wenn er das bevorzugt, kann er stattdessen durch die zugehörige Durchgangsstelle ein ununterbrochenes Patchkabel hindurchziehen und mit diesem die Spleißstelle bilden und ablegen. Dann kann das Pigtail ungenutzt liegenbleiben, um den beschriebenen denkbaren späteren Wechsel zur Patchstelle zu erleichtern.

Eine bevorzugte Anordnung der Patch- und Durchgangsstellen ist in Reihen aufgebaut, und zwar zumindest eine Reihe für jede Sorte. Diese können parallel zueinander verlaufen, wobei ein relativ geringer Abstand dazwischen bevorzugt ist. Bevorzugte Abstandskriterien hierzu entsprechen den oben für den Nächstnachbarabstand mit Bezug auf den Anschlusselementdurchmesser formulierten Kriterien (hier als Reihenabstand). Insbesondere kann es dabei eine direkte Zuordnung zwischen sich lediglich durch den Versatz zwischen den Reihen entsprechenden und ansonsten analog positionierten Durchgangs- und Patchstellen geben (also mit einem Reihenversatz senkrecht zur jeweiligen Reihenrichtung).

Eine weitere Möglichkeit sieht eine alternierende Folge vor. Dabei wechseln sich also Durchgangsstellen und Patchstellen entlang einer Reihe ab, vorzugsweise einzeln abwechselnd, aber möglicherweise auch in Paaren abwechselnd. Solche Reihen können zusätzlich mehrfach nebeneinander vorliegen, wobei vorzugsweise die jeweilige Anordnung der Durchgangsstellen und der Patchstellen innerhalb der Reihen (unter Berücksichtigung des Versatzes quer zur Reihenrichtung) jeweils identisch ist.

Für die Durchgangsstellen können Klemmeinsätze vorgesehen sein, also Klemmkörper, die zur klemmenden Halterung eines durchlaufenden LWL-Kabels in der Öffnung einer Durchgangsstelle dienen. Dabei kann es sich bei den Klemmkörpern und/oder auch den Anschlusselementen z. B. um Spritzgussteile, Zinkdruckgussteile, Kohlefaserteile etc. handeln.

Z. B. kann ein Klemmkörper gemäß der EP 3 182 186 eingesetzt werden. Ein solches Kabelzugabfangelement weist elastische Rastelemente außen an einem Grundkörper auf, die an der Frontplatte verrasten können. Ferner ist ein zylindrisches Kabelführungsröhrchen in dem Grundkörper vorgesehen, das an den Enden herausragt. Der Grundkörper mit den Rastelementen und/oder dem Röhrchen kann einstückig z. B. als Spritzgusselement ausgebildet sein und zur Vereinfachung hinsichtlich mindestens einer und vorzugsweise zwei oder drei Mittelebenen symmetrisch sein. Er kann z. B. passend sein zu einer standardisierten Aufnahme eines LC-, SC- oder E-2000-Steckverbinders.

Oben wurde bereits darauf verwiesen, dass sogenannte Duplex-Patchstellen verwendet werden können. Dann bietet es sich an, entsprechend verkleinerte Klemmeinsätze vorzusehen, die ebenfalls zu zweit in einen entsprechenden Platz passen und damit für die nötige Verdopplung der Durchgangsstellen sorgen.

Die Patcheinheit ist vorzugsweise an einer Frontplatte angebracht, z. B. in Form von in Öffnungen in der Frontplatte eingesetzten lösbaren Anschlusselementen und gegebenenfalls Klemmelementen für Durchgangsstellen. Die Frontplatte ist dabei vorzugsweise gewinkelt zu einer Trägerplatte vorgesehen und kann dabei einstückig mit dieser oder daran angesetzt ausgebildet sein. Die Trägerplatte wiederum trägt die Spleißstellenablagen.

Die Frontplatte ist dabei vorzugsweise in der Nähe oder an einem Rand der Trägerplatte vorgesehen und von der Seite dieses Randes (von außen) aus direkt zugänglich und nicht etwa durch eine Abdeckplatte verdeckt, wie sie bspw. mit dem Bezugszeichen 22 in der bereits zitierten EP 2 669 726 A1 gezeigt ist. Solche Abdeckplatten finden sich auch sonst im Stand der Technik, erschweren aber den Zugang zur Patcheinheit.

Eine bevorzugte Ausgestaltung sieht vor, dass das Spleißmodul eine Drehlade, also eine um eine Drehachse aus einem weitergehenden Bauverbund heraus schwenkbare Baueinheit bildet, die mindestens die Trägerplatte mit den Spleißstellenablagen, die Frontplatte und die Patcheinheit umfasst. Die Drehachse läuft dabei vorzugsweise vertikal zur Trägerplatte und vorzugsweise durch eine in Bezug auf die Patcheinheit vordere (also zur Patcheinheit benachbarte) Ecke der Trägerplatte. Neben dem Ausführungsbeispiel kann dabei auf die EP 2 669 726 A1 verwiesen werden.

Diese zeigt auch, was im vorliegenden Zusammenhang ebenfalls vorgesehen ist, nämlich eine Unterbringung der einzelnen Spleißstellenablagen in zumindest einer Kassette, wobei solche Kassetten vorzugsweise ihrerseits als Mehrzahl gestapelt in dem Spleißmodul vorliegen. Die Spleißkassetten enthalten vorzugsweise jeweils eine Mehrzahl Spleißstellenablagen, etwa zwei (in/out) oder vier (dito mit Reserveablageplätzen). Z. B. kann ein Kassettenstapel sechs solche Kassetten enthalten.

Ferner sind vorzugsweise eine Mehrzahl Spleißkassettenstapel nebeneinander vorgesehen (bezüglich einer Richtung senkrecht zur Stapelrichtung und damit versetzt in der Ebene der Trägerplatte), etwa zwei Stapel mit bspw. jeweils sechs Kassetten. Solche Spleißmodule können ihrerseits gestapelt sein zu größeren Baueinheiten, die ihrerseits wiederum als Spleißmodulstapel in einer Mehrzahl in einem Verteilerschrank vorgesehen sein können.

Bei der Verwendung eines erfindungsgemäßen Spleißmoduls werden die LWL-Kabel vorzugsweise jeweils alternativ entweder durch eine Patchstelle oder eine nächstbenachbarte Durchgangsstelle geführt, aber nicht durch beide jeweils ein LWL-Kabel. Damit bleibt bei der Benutzung der Durchgangsstelle die Patchstelle zur späteren Verwendung frei und umgekehrt. Es ist also insbesondere möglich, Kabel zunächst durchgehend zu verlegen und dann mit minimaler Störung des Ordnungssystems und minimalem Aufwand für den Installateur später zu trennen und auf eine Patchstelle zu setzen. Wie bereits erläutert können natürlich auch einmal getrennte LWL-Kabel später durch durchgehende ersetzt werden, etwa um auf besondere Sicherheitsbedürfnisse eines Kunden einzugehen, wobei dann natürlich neu eingefädelt werden muss.

Die Erfindung wird im Folgenden anhand eines Ausführungsbeispiels näher erläutert. Dabei zeigt:
- Fig. 1: eine perspektivische Ansicht eines Stapels erfindungsgemäßer Spleißmodule übereinander;
- Fig. 2: den Spleißmodulstapel aus Fig. 1, wobei ein Spleißmodul nach vorn rechts herausgedreht ist;
- Fig. 3: eine analoge Ansicht, jedoch mit leicht verdrehter Perspektive;
- Fig. 4: eine zu Fig. 2 analoge Ansicht, jedoch mit um eine abweichende Drehachse herausgedrehtem Spleißmodul;
- Fig. 5: eine zu Fig. 1 analoge Ansicht, jedoch mit zwei zur Veranschaulichung eingezeichneten Drehachsenstiften;
- Fig. 6: eine perspektivische Ansicht eines der Spleißmodule aus dem Stapel gemäß den Fig. 1 bis 5;
- Fig. 7: einen Teil einer Patcheinheit des Spleißmoduls aus Fig. 6;
- Fig. 8: eine zu Fig. 7 analoge Ansicht, jedoch mit eingesetzten Halterungen für Steckverbindungselemente und zwei solchen Steckverbindungselementen mit jeweils anhängendem LWL-Kabel;
- Fig. 9: eine weitere solche Ansicht mit vollständig belegten Patchstellen mit jeweiligen Steckverbindungselementen;
- Fig. 10: eine zur Fig. 9 analoge Ansicht, wobei jedoch eine Patchstelle kabelfrei und stattdessen ein Kabel durch eine nächstbenachbarte Durchgangsstelle geführt ist;
- Fig. 11: eine analoge Ansicht zu Fig. 10, wobei das Kabel in der Durchgangsstelle durch ein Klemmelement festgelegt ist.

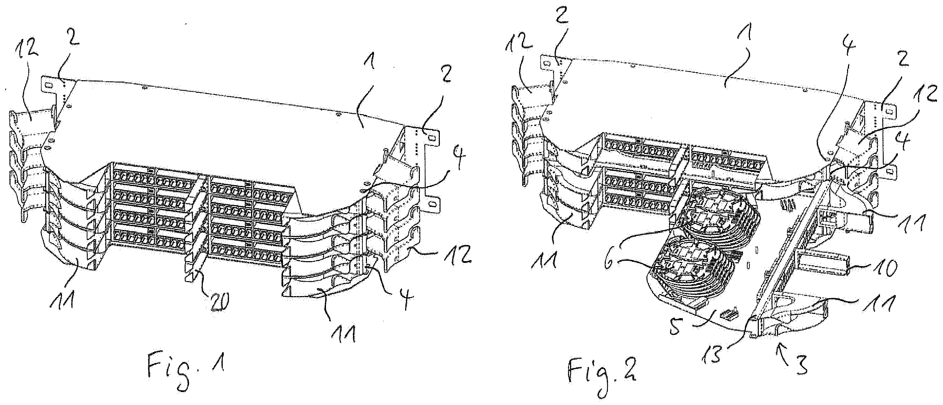

Fig. 1 zeigt in perspektivischer Darstellung von oben schräg rechts vorn einen Spleißmodulstapel aus vier vertikal übereinander gestapelten Spleißmodulen, die jeweils vertikal angeordnet sind. Im Spleißmodulstapel werden die vier Spleißmodule dabei durch einen Blechrahmen mit einer oberen Platte 1, einer Hinterwand mit seitlichen Befestigungslaschen 2 und einer nicht sichtbaren und zur Wand 1 analogen Unterwand zusammengehalten. Fig. 1 zeigt dabei bereits, dass der Spleißmodulstapel und die einzelnen Spleißmodule darin zu einer vertikalen Mittelebene (die von vorn nach hinten verläuft) spiegelsymmetrisch aufgebaut ist, also eine Rechts-links-Symmetrie aufweisen.

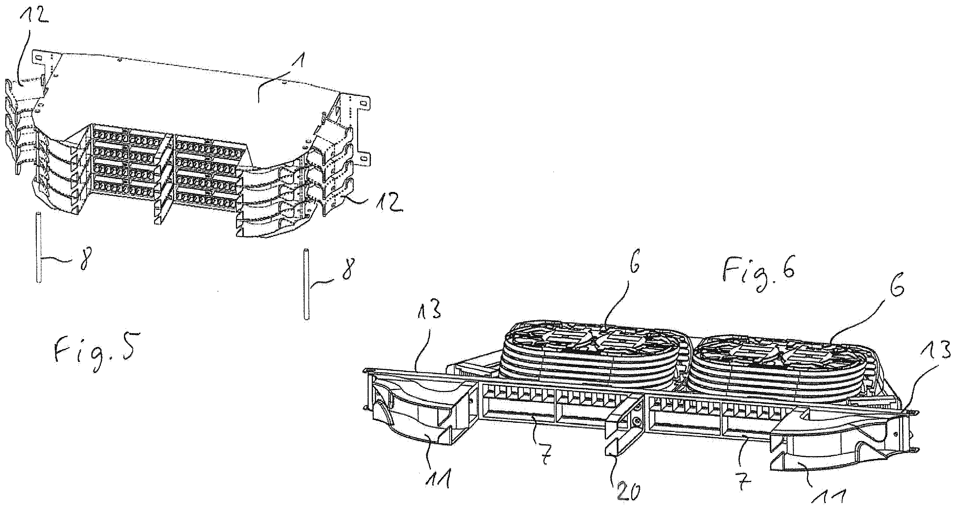

Fig. 2 zeigt den Spleißmodulstapel aus Fig. 1, wobei das zweitoberste Spleißmodul 3 um eine rechts vorn liegende Drehachse 4 (vgl. Fig. 5) herausgeschwenkt ist, also von oben betrachtet gegen den Uhrzeigersinn und um ungefähr 90°. Die übrigen drei Spleißmodule sind analog aufgebaut und analog verschwenkbar, und zwar alle um dieselbe Drehachse 4.

Das Spleißmodul 3 weist eine horizontal liegende und aus Blech gefertigte Trägerplatte 5 auf, auf der im (bezogen auf den eingedrehten Zustand) hinteren Teil zwei spiegelsymmetrisch nebeneinander liegende Spleißkassettenstapel gehalten sind, die jeweils sechs Spleißkassetten 6 enthalten. Die Spleißkassetten 6 in den Stapeln sind um eine hinten quer liegende Achse hochklappbar und erlauben damit einen Zugriff auf weiter unten liegende Kassetten. Sie sind jeweils in sich spiegelsymmetrisch bezüglich einer weiteren Mittelebene (parallel zur Hauptsymmetrieebene) durch ihre Mitte aufgebaut und demzufolge auch spiegelsymmetrisch zueinander (von Stapel zu Stapel). In jeder Kassette 6 der beiden Stapelkönnen vier Spleißstellen abgelegt werden, wobei im Regelfall jedem Anschluss eine Kassette zugeordnet ist, sodass zwei Speißstellenablagen (in/out) belegt sind, zwei weitere werden als Reserve freigehalten.

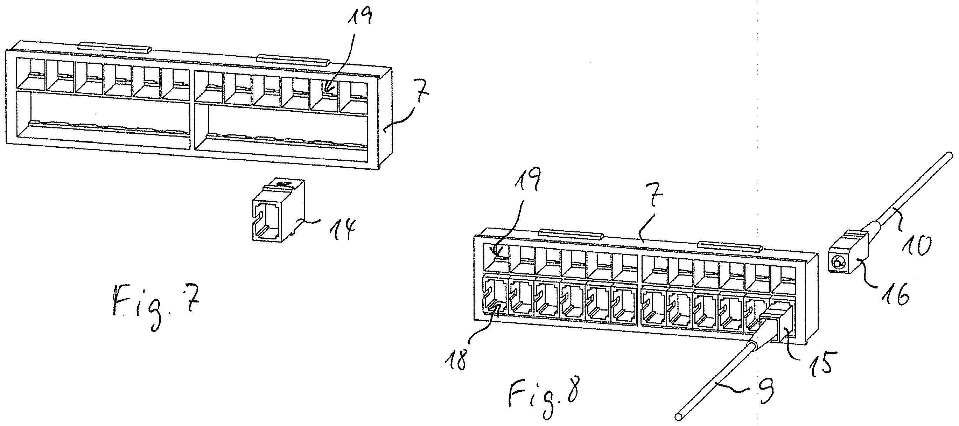

Das Blech der Trägerplatte 5 ist im vorderen Bereich um 90° hochgebogen und bildet damit eine querlaufende Frontplatte 13. Diese enthält jeweils rechteckige und zueinander spiegelsymmetrische Ausschnitte, in die Einsätze 7 gemäß den Fig. 7 ff (Spritzgussteile) eingesetzt sind, vgl. auch Fig. 6.

Diese Einsätze 7 werden anhand der Fig. 7 ff näher erläutert. Sie sind über in Fig. 7 oben gut sichtbare Rastvorsprünge in entsprechenden Ausnehmungen in der Blechfrontplatte 13 gehalten.

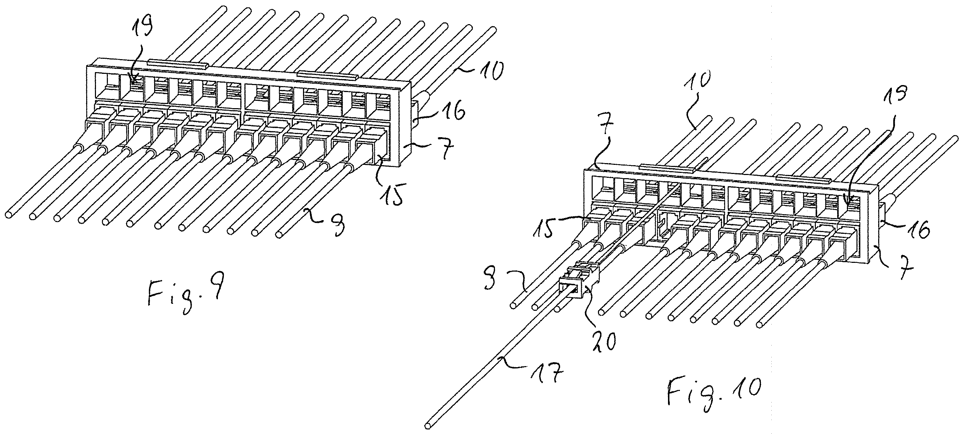

Wie sich aus Fig. 9 ergibt, dienen sie der eingangs bereits geschilderten Unterbringung von Patchstellen 18, also dem Übergang zwischen den Pigtails und der weiterführenden Patch-Kabeln. Diese Kabel sind in den Fig. 1 bis 7 nicht gezeigt. Allerdings verlaufen die Pigtails, wie sich z. B. auch aus den eingangs zitierten Anmeldungen ergibt, innerhalb des Spleißmoduls 3 und über der Trägerplatte 5 zu den einzelnen Spleißkassetten 6 in den beiden Stapeln, wobei es eine entsprechende Zuordnung zwischen den Patchstellen 18 und den Spleißkassetten gibt (zwei Patchstellen 18 pro Spleißkassette).

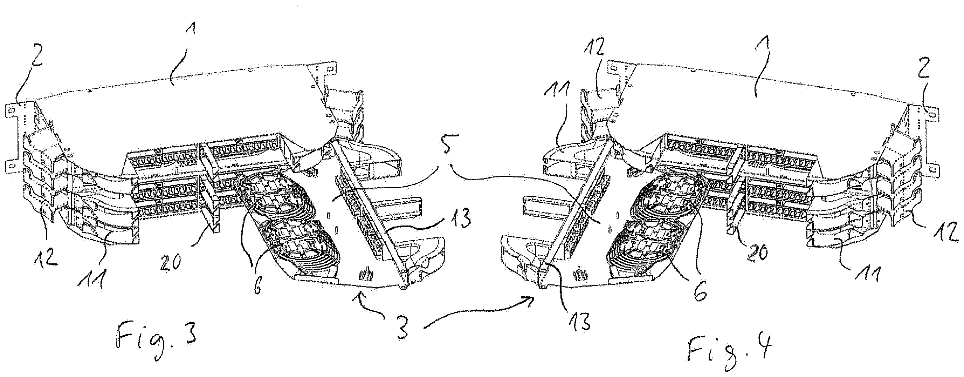

Dabei ist es, wie die Figuren verdeutlichen, vollkommen gleichgültig, ob die Kabel in einer bestimmten Anordnung oder in einer dazu rechts-links-vertauschten Anordnung verlegt werden, weil nämlich das Spleißmodul 3 und auch alle anderen Spleißmodule entsprechend symmetrisch ausgeführt sind. Das Gleiche gilt für den gesamten in den Figuren dargestellten Stapel. Es gilt auch für die in den Fig. 2 und 3 erkennbare Drehbarkeit, die gemäß Fig. 4 mit links vorn liegender Drehachse gelöst sein kann, wozu entsprechend Fig. 5 ein dort unter dem Spleißmodulstapel dargestellter Drehachsstift 8 in entsprechende Löcher rechts oder links eingeschoben wird.

Damit ist es insbesondere möglich, die gemäß Fig. 9 bis 11 nach vorne herauslaufenden LWL-Kabel 9 vor der Frontplatte 13 nach rechts oder nach links weiterzuführen. Dazu sind vor der Frontplatte 13 als Kunststoffspritzgussteile realisierte Elemente 20 und 11 vorgesehen, und zwar eine mittige rahmenartige Klammer 20, die von einem rechten Einsatz 7 ausgehende LWL-Kabel 9, die nach links umgelenkt werden, zusammenfassen kann, oder umgekehrt. Dazu ist die Klammer 20 flexibel und erlaubt ein Hindurchführen der einzelnen Kabel durch den vorn eingezeichneten schrägen Schlitz. Ferner werden die LWL-Kabel 9 dann gemeinsam durch einen doppelt gebogenen Kanal in einem seitlichen Element 11 geführt, das symmetrisch und beidseits vorgesehen ist und je nach individueller Wahl nur auf einer Seite benutzt wird. Üblicherweise ist dabei bevorzugt, die LWL-Kabel 9 nah der Drehachse 4, also bei rechtsliegender Drehachse durch das rechte Element 11 und bei linksliegender Drehachse durch das linke Element 11 zu führen. Die Fig. 1 bis 5 zeigen ferner fächerartige und ebenfalls als Kunststoffspritzgussteile ausgeführte Elemente 12 rechts und links an den einzelnen Spleißmodulen zur Weiterführung der LWL-Kabel 9 stromabwärts von den Elementen 11.

Auch der Innenaufbau der einzelnen Spleißmodule wie des Moduls 3 ist rechts-links-symmetrisch, und zwar bezüglich Frontplatte 13, Trägerplatte 5 und den Stapeln aus den Spleißkassetten 6.

Fig. 6 zeigt deutlich, dass in die Frontplatte 13 links und rechts von der Klammer 10 zwei Einsätze 7 gemäß Fig. 7 eingerastet sind. Diese enthalten in ihrem unteren Bereich eine horizontale Reihe aus insgesamt 12 Plätzen für Steckverbindungsaufnahmen 14, vgl. Fig. 8, die ihrerseits ebenfalls rastend in den Einsätzen 7 halten. In diese Steckverbindungsaufnahmen 14 können die an den Kabeln 9 und 10 vorgesehenen Steckverbindungselemente 15 und 16 eingesteckt werden, wobei im typischen Auslieferungszustand das von hinten (gem. Fig. 8 und typischer Nutzerperspektive) eingesteckte Element 16 in einem solchen Einsatz 14 gehalten ist und damit eine Buchse für das Element 15 bildet. In dieser Form können alle 12 Plätze besetzt werden, womit sich eine Reihe Patchstellen 18 ergibt, vgl. Fig. 9. Die Pigtails 10 führen dabei z. B. zu zweit zu je einer der Spleißkassetten 6 auf ihrer Seite (rechts oder links).

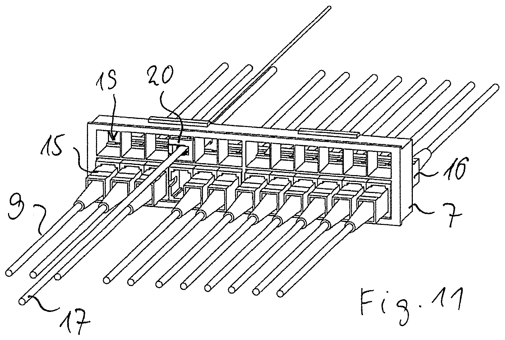

Wenn nun zu einem späteren Zeitpunkt oder von vornherein ein Kabel nicht aufgetrennt werden soll, wie z. B. das Kabel 17 in Fig. 10, so kann es durch eine der über den Patchstellen 18 angeordneten Durchgangsstellen 19 gezogen werden, wie die Fig. 10 und 11 zeigen. Dabei kann ein Klemmelement 20 Verwendung finden, das einerseits in der Durchgangsstelle hält und andererseits das Kabel 17 zur Zugentlastung klemmt. Dabei wird eine außerhalb des Spleißmoduls 3 vorhandene Schutzhülle des Kabels 17 in dem Klemmelement 20 verklemmt und nicht weiter in das Spleißmodul 3 geführt. Zu diesem Klemmelement 20 kann verwiesen werden auf die bereits zitierte EP 3 182 186. Insbesondere ist es möglich, die (oder bestimmte) Kabel 17 vorab durchgängig zu verlegen und erst nachträglich durch getrennte Kabel zu ersetzen bzw. aufzutrennen und dementsprechend steckbare Patchstellen 18 einzusetzen. Das entspricht einem Schritt von Fig. 11 zu Fig. 9.

Die Durchgangsstellen 19, optional mit den Elementen 20, sind dabei direkt über den zugeordneten Patchstellen 18 angeordnet und somit nächstbenachbart dazu. Der typische Abstand zwischen den jeweiligen Kabelmittelpunkten beträgt größenordnungsmäßig einen (gemittelten) Durchmesser eines Steckelements 15 oder 16 (in der Vertikalen). Man könnte sich natürlich auch vorstellen, die beiden horizontalen Reihen aus Patchstellen 18 und Durchgangsstellen 19 zu ersetzen durch z. B. jeweils zwei übereinander liegende Patchstellen und daneben zwei übereinander liegende Durchgangsstellen und dann wieder zwei übereinander liegende Patchstellen usw.. Das würde an der Nächstnachbarschaft nichts Wesentliches ändern.

Beide Varianten sorgen dafür, dass für ein umzusetzendes Kabel (vgl. die Fig. 9 und 11) mit minimaler Änderung des übrigen Kabelverlaufs eine alternative Durchgangsstelle (oder Patchstelle) für eine vorher benutzte Patchstelle (oder Durchgangsstelle) gefunden werden kann, sodass die Gesamtanordnung so übersichtlich wie möglich erhalten bleibt und nicht umsortiert werden muss.

Die Fig. 1 bis 6 zeigen im Vergleich zu den zitierten Dokumenten aus dem Stand der Technik deutlich, dass die Patchstellen 18 und die Durchgangsstellen 19 in der Frontplatte 13 der Spleißmodule von vorn optimal zugänglich sind und insbesondere keine weitere Abdeckung mehr stört (außer natürlich einer Schranktür oder dergleichen). Im Stand der Technik waren Abdeckplatten unterschiedlicher Bauform verbreitet, die aber beim Umsortieren und/oder Umwandeln von gepatchten zu durchgängigen LWL-Kabeln den Zugang erschweren.

Ferner kann man sich anhand z. B. der jeweils letzten Abbildungen und zugehörigen Erläuterungen in den zitierten Dokumenten leicht vorstellen, wie mehrere der in den Fig. 1 bis 5 dargestellten Spleißmodulstapel übereinander gestapelt in einem Verteilerschrank untergebracht sind. Der Verteilerschrank seinerseits kann, muss aber nicht, rechts-links-symmetrisch aufgebaut sein. Selbst bei nicht symmetrischem Aufbau kann es praktisch sein, den Anschlag (die Drehachslage) einer Verteilerschranktür wechseln zu können.

Unabhängig davon ist es jedenfalls von großem Vorteil, abhängig von den individuellen baulichen Gegebenheiten wählen zu können, ob die LWL-Kabelstränge zu den Patchstellen und zu den Spleißstellen nach rechts oder nach links weitergeführt werden, und dabei die Verlegung in den Spleißmodulen individuell wählen zu können.

## Patentansprüche

1. Spleißmodul (3) für Lichtwellenleiter-Kabel, LWL-Kabel, (9,10,17) mit
einer Vielzahl Spleißstellenablagen in dem Spleißmodul (3) und
einer Patcheinheit, die eine Vielzahl Patchstellen (18) mit jeweils einer lösbaren Verbindungseinrichtung (14) für ein jeweiliges LWL-Kabel (9) aufweist,
wobei die Patcheinheit zusätzlich Durchgangsstellen (19) ohne lösbare Verbindungseinrichtungen aufweist, welche stattdessen für den Durchgang je eines durchlaufenden LWL-Kabels (17) durch eine jeweilige Öffnung jeder Durchgangsstelle (19) vorgesehen sind
und die Durchgangsstellen (19) und die Patchstellen (18) jeweils nächstbenachbart zueinander sind, und zwar in dem Sinn, dass von einer Patchstelle (18) ausgehend bezüglich einer Richtung quer zur lokalen LWL-Kabelrichtung nicht alle übrigen Patchstellen (18) näher liegen als die nächste Durchgangsstelle (19), es also mindestens eine Patchstelle (18) gibt, die weiter entfernt ist als eine solche nächste Durchgangsstelle (19), wobei an den Patchstellen (18) jeweils lösbare Anschlusselemente (16) von zu jeweiligen der Spleißstellenablagen führenden Pigtail-Kabeln (10) vorliegen, welche ausgelegt sind zu Verbindungen mit komplementären lösbaren Anschlusselementen (15) jeweiliger Patchkabel (9) an den Patchstellen (18),
**dadurch gekennzeichnet, dass** die Pigtail-Kabel (10) bereits vorliegen und die jeweilige Patchstelle (18) mit einer jeweiligen der Spleißstellenablagen verbinden, in der allerdings noch keine Spleißstelle gebildet und abgelegt ist.

2. Spleißmodul (3) nach Anspruch 1, bei dem der Abstand der zueinander nächstbenachbarten Durchgangsstellen (19) und Patchstellen (18) in einer Richtung senkrecht zur lokalen Richtung des LWL-Kabels (9) und bezogen auf die Position der LWL-Kabelmitten höchstens fünf Durchmesser der Verbindungseinrichtung (14) der Patchstellen (18) beträgt.

3. Spleißmodul (3) nach einem der vorstehenden Ansprüche, bei dem die Patchstellen (18) und die Durchgangsstellen (19) in einer 1:1-Entsprechung vorliegen.

4. Spleißmodul (3) nach einem der vorstehenden Ansprüche, bei dem die Patchstellen (18) und die Durchgangsstellen (19) in horizontalen und zueinander parallelen Reihen, zumindest eine Reihe Patchstellen (18) und zumindest eine Reihe Durchgangsstellen (19), angeordnet sind.

5. Spleißmodul nach einem der Ansprüche 1 bis 3, bei dem die Patchstellen und die Durchgangsstellen in alternierender Folge angeordnet sind, sodass sich entlang einer Reihe Patchstellen und Durchgangsstellen abwechseln.

6. Spleißmodul (3) nach einem der vorstehenden Ansprüche mit einem Klemmeinsatz (20) zum Klemmen eines durchlaufenden LWL-Kabels (17) in einer Durchgangsstelle (19).

7. Spleißmodul (3) nach einem der vorstehenden Ansprüche mit einer Trägerplatte (5), welche die Spleißstellenablagen trägt, und einer Frontplatte (13), die zu der Trägerplatte (5) gewinkelt mit dieser verbunden ist und an welcher die Patcheinheit angebracht ist.

8. Spleißmodul (3) nach Anspruch 7, bei dem die Frontplatte (13) mit der Patcheinheit an einem Rand der Trägerplatte (5) oder zu einem Rand derselben benachbart vorgesehen ist und von der Seite dieses Randes aus direkt zugänglich ist, also insbesondere nicht durch eine Abdeckplatte verdeckt ist.

9. Spleißmodul (3) nach Anspruch 7 oder 8, bei dem die Trägerplatte (5) mit den Spleißstellenablagen, der Frontplatte (13) und der Patcheinheit eine Drehlade bildet, die um eine vertikal zur Trägerplatte (5) verlaufende Drehachse (4) drehbar ist.

10. Spleißmodul (3) nach einem der vorstehenden Ansprüche, bei dem die Spleißstellenablagen jeweils als Mehrzahl Spleißstellenablagen in jeweiligen Spleißkassetten (6) vorgesehen sind und die Kassetten (6) in einer Mehrzahl gestapelt in dem Spleißmodul (3) vorgesehen sind.

11. Spleißmodul (3) nach Anspruch 10, bei dem mindestens zwei Stapel Spleißkassetten (6) in einer Richtung senkrecht zur Stapelrichtung nebeneinander vorgesehen sind.

12. Spleißmodulstapel aus einer Mehrzahl übereinandergestapelter Spleißmodule (3)
nach einem der vorstehenden Ansprüche.

13. Verteilerschrank mit einer Mehrzahl Spleißmodulstapel nach Anspruch 12.

14. Verteilerschrank nach Anspruch 13 mit einer Mehrzahl Spleißmodule (3) nach Anspruch 9, optional kombiniert mit Anspruch 10 oder 11, welche Spleißmodule (3) gemäß Anspruch 12 übereinander gestapelt sind, und zwar zu einer Mehrzahl Spleißmodulstapel, wobei die Spleißmodule (3) in den Spleißmodulstapeln einerseits und die Spleißmodulstapel andererseits in der Richtung der Drehachse (4) gestapelt sind.

15. Verwendung eines Spleißmoduls (3) nach einem der Ansprüche 1 bis 11 oder Spleißmodulstapels nach Anspruch 12, bei welcher Lichtwellenleiter-Kabel, LWL-Kabel, (9,10,17) alternativ durch jeweilige Patchstellen (18) oder nächstbenachbarte Durchgangsstellen (19) geführt werden, wobei im Fall einer Patchstelle (18) eine nächstbenachbarte Durchgangsstelle (19) kabelfrei bleibt und umgekehrt.

## Claims

1. A splice module (3) for optical fibre cables (9, 10, 17), comprising:
a multiplicity of splice point receivers in the splice module (3) and
a patch unit having a multiplicity of patch points (18), each with a detachable connection device (14), for a respective optical fibre cable (9),
wherein the patch unit also has passage points (19) with no detachable connection devices, which are instead provided for the passage of one continuous optical fibre cable (17) through a respective opening of each passage point (19),
and wherein the passage points (19) and the patch points (18) are each arranged directly adjacent to each other in the sense that, starting from a patch point (18) and proceeding relative to a direction transverse to the local direction of the optical fibre cable, not all the other patch points (18) are closer than the nearest passage point (19), so there is at least one patch point (18) which is further away than such a nearest passage point (19),
wherein detachable connecting elements (16) for pigtail cables (10) leading to the respective splice point receivers are present on the patch points (18),
which connecting elements are configured to create connections with complementary detachable connecting elements (15) on the respective patch cables (9) at the patch points (18),
**characterised in that** the pigtail cables (10) are already present and connect the respective patch point (18) to a respective one of the splice point receivers in which no splice point has yet been formed or received.

2. The splice module (3) according to claim 1, wherein the distance between the passage points (19) and patch points (18) arranged directly adjacently to each other in a direction perpendicular to the local direction of the optical fibre cable (9) and relative to the position of the centres of the optical fibre cables does not exceed five times the diameter of the connection device (14) of the patch points (18).

3. The splice module (3) according to one of the preceding claims, wherein the patch points (18) and the passage points (19) are present in a 1:1 correspondence.

4. The splice module (3) according to one of the preceding claims, wherein the patch points (18) and the passage points (19) are arranged in horizontal rows that are parallel to each other, with at least one row of patch points (18) and at least one row of passage points (19).

5. The splice module according to one of claims 1 to 3, wherein the patch points and passage points are arranged alternately, so that there are alternate patch points and passage points along a row.

6. The splice module (3) according to one of the preceding claims, comprising a clamp insert (20) for clamping a continuous optical fibre cable (17) passing through a passage point (19).

7. The splice module (3) according to one of the preceding claims, comprising a mounting plate (5) which bears the splice point receivers, and a front plate (13) which is connected, at an angle, to the mounting plate (5) and to which the patch unit is attached.

8. The splice module (3) according to claim 7, wherein the front plate (13) provided with the patch unit is arranged on an edge of the mounting plate (5) or adjacent to the edge of the same and is directly accessible from the side of this edge, and is therefore in particular not covered by a cover plate.

9. The splice module (3) according to claim 7 or 8, wherein the mounting plate (5) comprising the splice point receivers, the front plate (13) and the patch unit forms a revolving drawer, which drawer can be rotated around a rotating axis (4) running vertical to the mounting plate (5).

10. The splice module (3) according to one of the preceding claims, wherein the splice point receivers are respectively provided in the splice module as a plurality of splice point receivers in respective splice cassettes (6) and the cassettes (6) are stacked as a plurality in the splice module (3).

11. The splice module (3) according to claim 10, wherein at least two stacks of splice cassettes (6) are provided next to each other in a direction perpendicular to the direction of the stack.

12. A splice module stack consisting of a plurality of splice modules (3) according to one of the preceding claims stacked one on top of the other.

13. A distribution cabinet with a plurality of splice module stacks according to claim 12.

14. The distribution cabinet according to claim 13 with a plurality of splice modules (3) according to claim 9, which is optionally combined with claim 10 or 11, which splice modules (3) are stacked one on top of the other in accordance with claim 12, and namely in such a way as to form a plurality of splice module stacks, wherein said splice modules (3) in the splice module stacks on the one hand and said splice module stacks on the other hand are stacked in the direction of the axis of rotation (4).

15. A use of a splice module (3) according to one of claims 1 to 11 or of a splice module stack according to claim 12, in which optical fibre cables (9, 10, 17) are alternatively routed through respective patch points (18) or through directly adjacent passage points (19), wherein a directly adjacent passage point (19) remains cable-free in the case of routing through a patch point (18) and vice versa.

## Revendications

1. Module d'épissure (3) pour câbles à fibre optique (9, 10, 17) comprenant:
une pluralité d'éléments récepteurs de points d'épissure dans le module d'épissure (3), et
un ensemble de raccordement présentant une pluralité de points de raccordement (18) dotés chacun d'un dispositif de connexion détachable (14) destiné à un câble à fibre optique (9) respectif,
dans lequel l'ensemble de raccordement présente en outre des points de passage (19) non dotés de dispositif de connexion détachable mais qui sont plutôt prévus pour le passage d'un câble à fibre optique (17) respectif continu par une ouverture respective de chacun des points de passage (19), et
les points de passage (19) ainsi que les points de raccordement (18) sont agencés au voisinage immédiat les uns des autres, et ce, au sens où, en partant d'un point de raccordement (18), eu égard à une direction transversale à la direction locale d'un câble à fibre optique, tous les points de raccordement (18) restants ne sont pas plus proches que le point de passage (19) le plus proche, c'est-à-dire qu'il y a au moins un point de raccordement (18) qui est plus éloigné qu'un tel point de passage (19) le plus proche,
et dans lequel, aux points de raccordement (18), il se trouve des éléments de branchement détachables (16) respectifs de câbles amorces (10) menant respectivement aux éléments récepteurs de points d'épissure, lesquels sont conçus pour des connexions avec des éléments de branchement détachables (15) complémentaires de câbles de raccordement (9) respectifs au niveau des points de raccordement (18),
**caractérisé en ce que** les câbles amorces (10) sont déjà présents et relient le point de raccordement (18) respectif à un des éléments récepteurs de points d'épissure respectif dans lequel aucun point d'épissure n'est encore formé et reçu.

2. Module d'épissure (3) selon la revendication 1, dans lequel l'écart entre les points de passage (19) et les points de raccordement (18) immédiatement voisins dans une direction perpendiculaire à la direction locale du câble à fibre optique (9) et par rapport à la position du centre des câbles à fibre optique fait au maximum le quintuple du diamètre du dispositif de connexion (14) des points de raccordement (18).

3. Module d'épissure (3) selon l'une des revendications précédentes, dans lequel les points de raccordement (18) et les points de passage (19) sont présents selon une correspondance de 1:1.

4. Module d'épissure (3) selon l'une des revendications précédentes, dans lequel les points de raccordement (18) et les points de passage (19) sont disposés en rangées horizontales et parallèles entre elles, avec au moins une rangée de points de raccordement (18) et au moins une rangée de points de passage (19).

5. Module d'épissure selon l'une des revendications 1 à 3, dans lequel les points de raccordement et les points de passage sont agencés en suite alternative de telle manière que, le long d'une rangée, des points de raccordement et des points de passage sont en alternance.

6. Module d'épissure (3) selon l'une des revendications précédentes, comportant un dispositif de retenue (20) permettant de retenir un câble à fibre optique (17) continu dans un point de passage (19).

7. Module d'épissure (3) selon l'une des revendications précédentes, comportant une plaque de support (5) portant les éléments récepteurs de points d'épissure, et une plaque avant (13) reliée à ladite plaque de support (5) en formant un angle avec cette dernière et sur laquelle l'ensemble de raccordement est disposé.

8. Module d'épissure (3) selon la revendication 7, dans lequel la plaque avant (13) comportant l'ensemble de raccordement est prévue sur un bord de la plaque de support (5) ou voisine du bord de cette dernière et est directement accessible du côté de ce bord, c'est-à-dire particulièrement qu'elle n'est pas couverte par une plaque de protection.

9. Module d'épissure (3) selon la revendication 7 ou 8, dans lequel la plaque de support (5) comportant les éléments récepteurs de points d'épissure, la plaque avant (13) et l'ensemble de raccordement forme un tiroir pivotant susceptible de tourner sur un axe de rotation (4) orienté verticalement par rapport à la plaque de support (5).

10. Module d'épissure (3) selon l'une des revendications précédentes, dans lequel les récepteurs de points d'épissure sont prévus respectivement sous la forme d'une multiplicité d'éléments récepteurs de points d'épissure dans des cassettes d'épissure (6) respectives et ces cassettes (6) sont prévues empilées en plusieurs exemplaires dans le module d'épissure (3).

11. Module d'épissure (3) selon la revendication 10, dans lequel au moins deux empilements de cassettes d'épissure (6) sont prévus côte à côte dans un sens perpendiculaire au sens d'empilement.

12. Empilement de modules d'épissure constitué d'une multiplicité de modules d'épissure (3) selon l'une des revendications précédentes empilés les uns sur les autres.

13. Armoire de distribution comportant une multiplicité d'empilements de modules d'épissure selon la revendication 12.

14. Armoire de distribution selon la revendication 13, comportant une multiplicité de modules d'épissure (3) selon la revendication 9 éventuellement associée à la revendication 10 ou 11, lesquels modules d'épissure (3) sont empilés les uns sur les autres conformément à la revendication 12, et ce, pour former une multiplicité d'empilements de modules d'épissure, lesdits modules d'épissure (3) desdits empilements de modules d'épissure d'une part et lesdits empilements de modules d'épissure d'autre part étant empilés dans la direction de l'axe de rotation (4).

15. Utilisation d'un module d'épissure (3) selon l'une des revendications 1 à 11 ou d'un empilement de modules d'épissure selon la revendication 12, selon laquelle des câbles à fibre optique (9, 10, 17) sont conduits, en variante, à travers des points de raccordement (18) ou des points de passage (19) immédiatement voisins respectifs ; lorsqu'un point de raccordement (18) est occupé, un point de passage (19) immédiatement voisin demeure exempt de câble, et inversement.
